# EUROPÄISCHE PATENTSCHRIFT

(11) **EP 3 155 136 B1**
(45) Veröffentlichungstag und Bekanntmachung des Hinweises auf die Patenterteilung: **16.09.2020**
(21) Anmeldenummer: 15736379.7
(22) Anmeldetag: 30.04.2015
(51) Int. Cl.: C22B 7/00, C22B 15/06, C22B 25/02, C22B 7/04, C22B 15/00, C22B 25/06, C22B 1/216, C22B 1/00, C22B 1/248

(54) **VERFAHREN ZUR RÜCKGEWINNUNG VON METALLEN AUS SEKUNDÄRSTOFFEN UND ANDEREN MATERIALIEN MIT ORGANISCHEN BESTANDTEILEN**
METHOD FOR RECOVERING METALS FROM SECONDARY MATERIALS AND OTHER MATERIALS COMPRISING ORGANIC CONSTITUENTS
PROCÉDÉ DE RÉCUPÉRATION DE MÉTAUX À PARTIR DE SUBSTANCES SECONDAIRES ET D'AUTRES MATÉRIAUX COMPRENANT DES COMPOSANTS ORGANIQUES

(30) Priorität: 13.06.2014 DE 102014008987
(43) Veröffentlichungstag der Anmeldung: 19.04.2017
(73) Patentinhaber: Aurubis AG, 20539 Hamburg (DE)
(72) Erfinder: AYHAN, Mehmet, 59379 Selm (DE); ESCHEN, Marcus, 48308 Senden (DE)
(74) Vertreter: Klickow & Wetzel PartGmbB
(86) Internationale Anmeldenummer: PCT/DE2015/000219
(87) Internationale Veröffentlichungsnummer: WO 2015/188799

(56) Entgegenhaltungen:
- DE-A1-102012 005 401
- US-A- 2 042 291
- DATABASE WPI Week 201208 Thomson Scientific, London, GB; AN 2012-B06976 XP002743171, & WO 2012/008453 A1 (MITSUI MINING & SMELTING CO LTD) 19. Januar 2012 (2012-01-19)

## Beschreibung

Die Erfindung betrifft ein Verfahren zur Rückgewinnung von Metallen, nämlich von Edelmetallen und Kupfer aus Sekundärstoffen und anderen Materialien mit organischen Bestandteilen, wobei den Sekundärstoffen und anderen Materialien durch Behandlung in einem Prozessraum die organischen Komponenten entzogen werden, und die Sekundärstoffe und anderen Materialien mit organischen Bestandteilen für den Rückgewinnungsprozess vorbereitet sind sowie bei dem der Rückgewinnungsprozess wenigstens zweistufig ausgebildet ist, sodass zumindest ein erstes und ein zweites Metall rückgewinnbar ist, und dass das Verfahren die Prozessvariablen der ersten Stufe des Rückgewinnungsprozesses derart steuert, dass die Bildung einer dünnflüssige Schlacke und einer Metallschmelze unterstützt ist, und eine der ersten Stufe des Rückgewinnungsprozesses nachgelagerte Prozessgasbehandlung zur Reduzierung von brennbaren Gasanteilen und Schadstoffen vorgesehen ist

Verfahren zur Rückgewinnung von Metallen aus Sekundärstoffen und anderen Materialien mit organischen Bestandteilen mit kontinuierlicher und diskontinuierlicher Arbeitsweise sind im Stand der Technik bekannt. Dabei bezieht sich der Kontinuitätsbegriff üblicherweise auf die Zuführung des Sekundärstoffes in das Verfahren und den Verfahrensablauf an sich. Es ist aber auch möglich, zwischen einer kontinuierlichen bzw. diskontinuierlichen Zuführung des Sekundärstoffes und der kontinuierlichen bzw. diskontinuierlichen thermischen Behandlung in den Prozessraum zu differenzieren. Ebenfalls bekannt ist es, die Rückgewinnung durch eine rein mechanische Behandlung oder eine Kombination beider Prozesse, beispielsweise eine thermische Behandlung mit vorgeschalteter mechanischer Erstbehandlung, zu realisieren.

Die thermische Behandlung innerhalb eines Prozessraumes wird in der Regel durch pyrolytische Zersetzung, Verbrennung oder durch Vergasung realisiert. Bei der Pyrolyse erfolgt ein Bindungsbruch insbesondere der großen Moleküle durch thermochemische Spaltung organischer Verbindungen durch ausschließliche Einwirkung hoher Temperaturen in einem Bereich von 200-900°C. Ergebnis ist, dass das organische Material aus Ausscheidungsprodukt in fester Form vorliegt, häufig als Pyrolysekoks bezeichnet. Bei der Verbrennung und Vergasung werden neben der Temperaturerhöhung Sauerstoff oder andere Mittel zur Vergasung zugeführt um die organischen Sekundärstoffbestandteile in einen gasförmigen Aggregatzustand zu überführen. Bekannt ist auch schon der Einsatz von E-Schrott im Drehrohrofen.

Die DE 102005021656 A1 offenbart ein kontinuierliches Rückgewinnungsverfahren von Metallen, insbesondere Edelmetallen, aus Sekundärstoffen, wobei diese Sekundärstoffe in einem kontinuierlichen Prozess durch thermische Behandlung in einem Prozessraum die organischen Komponenten entzogen und oxidiert werden. Dabei werden die Sekundärstoffe kontinuierlich in einen Prozessraum eingeführt und unter kontinuierlicher intensiver Durchmischung thermisch behandelt, sodass die organischen Komponenten kontinuierlich entzogen und anschließend oxidiert werden und die metallhaltigen Komponenten sowie die weiteren anorganischen nichtmetallhaltigen Komponenten kontinuierlich aus dem Prozessraum ausgetragen werden. Das bedeutet, dass der Prozess nicht in getakteten, voneinander getrennten Prozessschritten abläuft derart, dass im Chargenbetrieb zunächst die Prozessraum mit Sekundärstoffen beschickt und nach der thermischen Behandlung entnommen wird, sondern es wird ein kontinuierliches, durchlaufendes Verfahren durchgeführt.

In der US 2 042 291 A wird bereits ein Verfahren zur Rückgewinnung von Kupfer und Zinn aus Schrott beschrieben. In einem drehbaren Konverter wird eine fließfähige Schlacke gebildet und abgetrennt. Zur Verarbeitung der Schlacke werden getrennte Prozessräume verwendet.

Aus der Veröffentlichung DATABASE WPI Week 201208 Thomson Scientific, London GB, ist ein weiteres Verfahren zur Rückgewinnung von Kupfer und Zinn aus Elektroschrott bekannt. In einem Drehrohrofen wird hierbei organisches Material verbrannt. Eine Schlackebgildung erfolgt bei gleichzeitiger Einblasung von Luft.

Verfahren zur Rückgewinnung von Metallen aus Sekundärstoffen und anderen Materialien mit organischen Bestandteilen innerhalb von kontinuierlichen und diskontinuierlichen Arbeitsweisen hinsichtlich der Beschickung und oder der Entnahme von Stoffen aus der Prozessraum sind im Stand der Technik somit bekannt. Ebenfalls bekannt sind kontinuierliche und diskontinuierliche Arbeitsweisen innerhalb der Prozessraum, d.h. die thermische Behandlung an sich.

Bei allen bekannten Verfahren werden die Verfahrensschritte, Steuerung der Zuführmengen der Sekundärstoffe, Sauerstoff, Wärmeenergie, verschiedene Prozessgase, Entnahmemengen und -Zeitpunkte und die Prozessführung an sich durch verschiedene Prozessparameter gesteuert. Besonders häufig ist die Vorrichtung zur Realisierung der thermischen Behandlung durch einen TBRC (Top Blowing Rotary Converter) verkörpert. Es handelt sich dabei um einen vorzugsweise zylindrischen, länglichen Schmelzofen, der sowohl um seine Längsachse drehbar als auch um seine Querachse schwenkbar ist. Der zunächst leere Schmelzofen wird geschwenkt, sodass eine Stellung vorliegt in der die vorzugsweise eine Öffnung des Ofens derart angeordnet ist, dass die Befüllung mit Sekundärstoffen möglich ist. Danach wird der Schmelzofen in eine Betriebsposition geschwenkt, die zwischen der horizontalen und der vertikalen Lage der axialen Schmelzraumachse liegt. Unter Anwendung hoher Temperaturen, der Zuführung von Vergasungsmitteln wie Sauerstoff und unter einer konstanten oder variablen Drehgeschwindigkeit des Schmelzofens um seine Mittenachse wird das Verfahren durchgeführt. Ergebnis der Rückgewinnung von Metallen in Form von Kupfer sind die vergasten organischen Bestanteile, eine Kupferphase und eine Schlacke.

Allen Bemühungen um Verbesserung der Rückgewinnungsprozesse ist zu Eigen, dass die Durchsatzmenge an recyceltem Metall, insbesondere Kupfer, erhöht werden soll. Anders ausgedrückt: Der Wirkungsgrad, insbesondere der Durchsatz und/oder die Raumzeit-Ausbeute, der Prozesse im Verhältnis von z.B. der aufgewendeten Energie soll erhöht werden. Um dies zu erreichen, wird eine kontinuierliche Beschickung des Prozessraumes sowie ein kontinuierlicher Prozessablauf angestrebt. Ein weiteres Ziel besteht darin, mehr Recyclingmaterialien einzusetzen, die reich an organischen Bestandteilen sind. Vor allem hinsichtlich der vergasten organischen Bestandteile, die als hochenergetisches Gas, oder als Gas mit hoher Schadstoffbelastung vorliegen gibt es jedoch erhebliche Probleme. Die Verunreinigungen können fester und, oder gasförmiger Natur sein wie verschiedene Stäube, Furane, Dioxine und Halogensäure.

Insbesondere sollen erfindungsgemäß Probleme vermieden werden, die durch starke Schwankungen des Einsatzmaterials hervorgerufen werden und die eine unterschiedliche Gasentwicklung und unterschiedliche Überschussenergien bei den Verbrennungsvorgängen zur Folge haben können. Ohne entsprechende Gegenmaßnahmen können diese Schwankungen zu einer besonders zurückhaltenden Chargierung und/oder zu einer Senkung der Chargiergeschwindigkeit führen. Hieraus resultieren Abweichungen von einem beim Betrieb der Anlage angestrebten Ziel und eine Verschlechterung sowohl der technischen als auch der wirtschaftlichen Resultate.

Der Grad der Schadstoffbelastung kann durch eine optimale Prozessführung der verschiedenen Prozessparameter erheblich beeinflusst werden. Die kontinuierliche Beschickung des Prozessraumes verursacht instationäre Prozesszustände, deren Resultat erhebliche Abweichungen von den für die Schadstoffminimierung optimalen Prozesszustände bedeutet und die dadurch starke Abgasverunreinigungen zur Folge haben. Im Ergebnis bedeutet also die Wirkungsgradsteigerung des Rückgewinnungsprozesses hinsichtlich der Steigerung des Recyclingmaterials durch kontinuierliche Arbeitsweise eine Erhöhung der Schadstoffbelastung des Abgases. Ein Grund für instationäre Prozesszustände ist die starke Homogenität des Einsatzgutes.

Umwelt- und Gesundheitsschutz erlauben es nicht, dass verunreinigte Gase in die Umgebungsluft abgegeben werden. Aus diesem Grund sind aufwändige Reinigungsschritte erforderlich, um dem Abgas die giftigen Substanzen zu entziehen. Zu diesem Zweck werden nachgeschaltete Gaskühler, Wäscher und Sackfilter eingesetzt.

Aufgabe der vorliegenden Erfindung ist es, ein Verfahren bereitzustellen, das die Menge des Einsatzmaterials steigert und dabei der erhöhten Belastung der Abgase mit Schadstoffen entgegenwirkt. Insbesondere soll die Menge an verarbeitbarem Einsatzmaterial mit Anteilen an organischem Material erhöht werden.

Zur Lösung dieser Aufgabe schlägt die erfindungsgemäße Lehre vor, ein zweistufiges Verfahren durch Kombination eines Prozessraumes zur Rückgewinnung von Metallen aus Sekundärstoffen und anderen Materialien mit organischen Bestandteilen sowie eines Ofens für die Mischzinngewinnung aus der Schlacke entsprechend der Merkmalskombination von Patentanspruch Nr. 1 zu verwenden. Insbesondere wird die Aufgabe erfindungsgemäß dadurch gelöst, dass der Anteil der organischen Bestandteile sich 5 % bis 60 % beträgt und dass eine hohe Stoffumsatzgeschwindigkeit realisiert ist.

Für die Verhüttung von komplexen Sekundärstoffen mit organischen Anteilen wird ein Verfahren vorgeschlagen, bei dem ein TBRC (Top Blowing Rotary Converter) als Prozessraum und ein Ofen für Mischzinngewinnung in einer vorgegebenen Art zusammenarbeiten. Es handelt sich um ein Verfahren zur Rückgewinnung von Metallen aus Sekundärstoffen und anderen Materialien mit hohen organischen Bestandteilen. Der TBRC wird im Chargenbetrieb unterhalten.

Die erste Prozessstufe liefert ein unreines Kupfer, sog. Schwarzkupfer, welches in der folgenden Oxidationsstufe gemäß einer ersten Verfahrensvariante im gleichen Aggregat zu Blister konvertiert wird. Gemäß einer zweiten Verfahrensvariante erfolgt die Weiterverarbeitung in einer separaten Anlage. Das andere Zielprodukt der Schmelzstufe ist metallarme Endschlacke. In der zweiten Prozessstufe wird neben dem Blister eine zinn- und bleireiche Schlacke produziert. Aus dieser Schlacke wird in dem Mischzinnofen eine Rohmischzinn-Legierung erzeugt.

Das zu verhüttende Ausgangsmaterial besteht aus Sekundärstoffen und anderen Materialien mit hohen und niedrigen organischen Bestandteilen als Recyclingvorstoffe in jeweils vorgegebenen Verhältnissen zueinander, wobei der Anteil der Materialien mit hohen organischen Anteilen wie z.B. Elektroschrott, Kabelreste, Rest-Kunststoffe aus elektrischen/elektronischen Geräten etc. bei ca. 50% liegt. Der Gesamtanteil organischen Materials liegt in der Regel bei 5 % bis 60 %, insbesondere bei 10% bis 40%.

In der Zeichnung sind Ausführungsbeispiele der Erfindung schematisch dargestellt. Es zeigt:

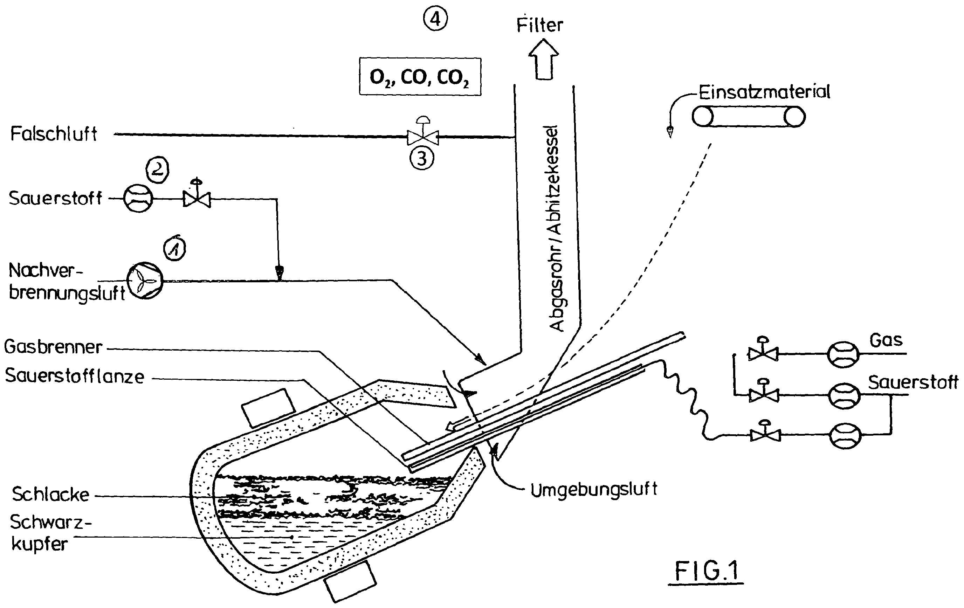

- Fig. 1: Eine schematische Darstellung zur Veranschaulichung einer Erfindungsvariante mit Nachverbrennung.

Die komplexen Sekundärstoffe mit organischen Anteilen werden neben der klassischen Bemusterung einer Charakterisierung bezüglich ihrer Energieinhalte und Anteile an Schlackenbildern unterworfen, um Informationen für die Prozessführung zu erhalten. Der Energieinhalt ist wichtig für den erzielbaren Durchsatz der Sekundärstoffe mit organischen Anteilen und damit an der Menge an Metallrückgewinnung. Die Informationen über die Schlackenbildner (Fe/FeO, SiO2, Al2O3, CaO, Na2O, K2O, Mn, Cr) sind wichtig für die Schlackenführung hinsichtlich der angestrebten geringen Viskosität und der Wertmetallgehalte.

Die hohen Gehalte an hochschmelzenden Bestandteilen in diesen Vorstoffen, insbesondere in Form von Al2O3, SiO2 sowie immer enthaltenen metallischem Aluminium, welches ebenfalls zu Al2O3 oxidiert, führen bei solchen Schmelzprozessen zu hochschmelzenden, hochviskosen Schlacken, die den Erhalt einer Schlacke mit geringen Wertmetallgehalten besonders erschweren. Die anderen Vorstoffe und Zwischenprodukte werden dem üblichen Bemusterungsprozess unterzogen.

Insbesondere die komplexen Sekundärstoffe mit organischen Anteilen müssen in eine Form gebracht werden, welche weitgehend die kontinuierliche Chargierung unterstützt. Angestrebt wird ein kontinuierlich chargierbarer Sekundärstoffanteil von über 80 %. Zu diesem Zweck werden die organischen Sekundärstoffe gemäß der Charakterisierungsergebnisse gruppiert und in entsprechende Vormischungen gebracht.

Um die verschiedenen Körnungen, Stückgrößen und Materialien kontinuierlich chargieren zu können, wird ein Chargierungssystem bestehend aus Chargierbunkern mit einstellbarer Materialentnahme und Förderbändern sowie Pneumatikförderern vorgeschlagen, die als System aufeinander abgestimmt arbeiten und das Einsatzmaterial an den Prozessraum verbringen. Das Material wird im Anschluss durch die Schwerkraft in den Prozessraum gefördert. Die für die kontinuierliche Chargierung nicht geeigneten Materialien (zu grob, nicht zerkleinerbar, nicht vereinzelbar etc.) werden über Chargiermulden in den kontinuierlichen Materialstrom oder direkt in den Prozessraum chargiert.

Für die sichere Beherrschung des Abgassystems und der Schadstoff- bzw. Brenngasanteile kommt der Charakterisierung und Vorbereitung der Recyclingmaterialien eine große Bedeutung zu. Die Vorstoffe in Form von komplexen Sekundärstoffen mit organischen Anteilen werden bezüglich ihrer Energieinhalte und ihres Abgasanfalls in einige Gruppen unterteilt. Die Sorten mit gleichen bzw. ähnlichen Eigenschaften werden zusammengefasst und ggf. auf verschiedenen bekannten, meist mechanischen Verfahren basierend zerkleinert. Aus den gruppierten Vorstoffen mit unterschiedlichen Eigenschaften wird ein Arbeitsgemisch mit ausreichend gleichem Verhalten im Prozessraum, der durch den TBRC gebildet ist, zusammengestellt und in Bunker mit Wiegeeinrichtungen gefüllt. Die Zuschlagstoffe für die Bildung einer dünnflüssigen und kupferarmen Schlacke gehören ebenfalls zum Gesamteintrag. Die Zuschlagstoffe sind besonders zu berücksichtigen, wenn diese zu gasförmigen Reaktionsprodukten führen, wie der Kalkstein.

Die Vorstoffe werden bezüglich ihrer Stückgröße in zwei Hauptgruppen geteilt: kleiner als ca. 150 mm, sichergestellt durch eine Absiebung auf dem Förderweg, und größer als 150 mm. Die grobe Fraktion wird über Chargiermulden in den TBRC chargiert. Die kontinuierliche Chargierung der feinen Materialien in den Prozessraum erfolgt über ein Chargierrohr/ -schurre/ bzw. Rutsche.

Der Prozessraum ist zu Beginn einer Charge leer bzw. enthält Restmengen an Schlacken. Durch geeignete Maßnahmen ist sicherzustellen, dass im Prozessraum möglichst schnell eine ausreichend dünnflüssige Schlacke vorhanden ist. Nur durch diese dünnflüssige Schlacke werden die Vorteile des Badschmelzverfahrens voll erreicht. Es hat sich gezeigt, dass der durch einen TBRC gebildeten

Prozessraum bei ausreichend genau charakterisierten Sekundärstoffen und bei Vorhandensein der dünnflüssigen Schlacke gleichmäßige Abgaswerte (Menge, Zusammensetzung und Temperatur) liefert und dadurch bei hohen Durchsatzleistungen läuft. Der Prozessraum ist darüber hinaus auch wegen des besonders vorteilhaften Stoff- und Energieaustausches durch einen TBR-Converter gebildet.

Der TBRC ist dem Grunde nach ein sowohl dreh- als auch kippbarer Prozessraum zur Realisierung einer Badschmelze. Die Drehung ist möglich um die Längsachse, das Kippen erfolgt quer dazu in einer zweiten Raumrichtung. Während der kontinuierlichen Chargierung des Materialgemisches in den laufenden thermischen Behandlungsprozess, welches die komplexen Sekundärstoffe mit organischen Anteilen enthält, fällt das Material in die Schmelze, wobei sofort die Vergasungsvorgänge starten. Die entstehenden Gase enthalten viel Ruß, Kohlenmonoxid, Wasserstoff und andere Kohlenwasserstoffe. Diese im Prozessraum aufsteigenden Gase werden durch den in den Prozessraum einzublasenden Sauerstoff erfasst und teilweise verbrannt. Der Sauerstoff wird über eine Lanze in den Prozessraum eingebracht. Im Prozessraum findet nur eine partielle, teilweise Verbrennung statt. Die Prozessraumgase mit immer noch hohem Anteil an brennbaren Gasen werden über ein Absaugsystem erfasst, thermisch nachverbrannt und danach die Bestandteile gereinigt.

Während der Chargierung wird der TBRC bei einer möglichst hohen Drehzahl bzw. Umfanggeschwindigkeit, d.h. ca. 15 Umdrehungen pro Minute bzw. 1 bis 3 Meter pro Sekunde betrieben. Die Prozessraumneigung kann dem Füllgrad des Prozessraums angepasst werden. Auch durch die Unterstützung dieser Maßnahmen wird die maximal mögliche Chargierleistung für den Prozessraum erreicht. Die Chargierung erfolgt bei einer konstanten Materialentnahme aus Bunkern, die mit bereits charakterisiertem Material gefüllt sind.

Wenn sich der Prozessraum in der Arbeitsposition befindet, die je nach Befüllungszustand zwischen einer horizontalen und einer vertikalen Lage der Prozessraum-Mittenachse liegt, wird die Sauerstofflanze in den heißen Prozessraum gefahren und zusammen mit dem geplanten Eintrag, d.h. Menge, Energieinhalt und spezifischer Abgasanfall der komplexen Sekundärstoffe mit organischen Anteilen eine angepasste Menge an Sauerstoff in den Prozessraum geblasen. Auch durch die Positionierung der Lanzenspitze wird dafür gesorgt, dass nach dem Beginn der Chargierung aus dem Prozessraum ein gleichmäßiges Abgas austritt. Nach der Positionierung der Lanze wird mit der Chargierung begonnen.

Das in Wesentlichen aus Feststoffen des Sekundärstoffes mit organischen Materialanteilen gebildete Chargiermaterial wird infolge der Prozessraumtemperaturen, die oberhalb des Schmelzpunktes dieser Materialien liegen und üblicherweise mehr als 1200°C betragen, aufgeschmolzen und reagieren zu Metallschmelze und flüssiger Schlacke. Die hohen Drehzahlen des Prozessraumes und die Schlacke mit geringer Viskosität ermöglichen die gewünschten hohen Stoffumsatzgeschwindigkeiten. Die Vorarbeiten für die Charakterisierung der Vorstoffe, insbesondere der Betriebs- und Zuschlagstoffe bezüglich der Schlackenbildner und auch die gezielte Schlackenführung durch die kontinuierliche Mitchargierung in richtiger Menge und Sorte über das kontinuierliche System sind die wichtigen Voraussetzungen dafür. So werden reaktionsträge hochviskose/dickflüssige Schlacken und Haufen an nicht aufgeschmolzenem Chargiergut vermieden. Der Prozessraum wird als Badschmelzofen verwendet, der zu jedem Zeitpunkt endpunktnah arbeitet.

Die Schlackenzusammensetzung und die noch enthaltenen Wertmetallgehalte werden während des Schmelzprozesses durch die Proben und deren Schnellanalytik überwacht. Falls notwendig werden die Schlackenzuschläge verändert. Anhand der Entnahme von Schlackenprobe und deren Analyse wird bestimmt, welche korrektiven Eingriffe während oder nach Beendigung der kontinuierlichen Chargierung erforderlich sind.

Falls es zu Abweichungen in der Analyse und Wertmetallgehalten der Schlacke kommt, wird ein kurzer und effektiver Reduktionsprozess durchgeführt, indem eine Lanze kurz in die Schlacke eingetaucht wird. Durch diesen Vorgang wird im Prozessraum ein perfektes Gleichgewicht zwischen der Schlacke und eisenhaltigem Rohkupfer erreicht. Dieser Schritt stellt das Erreichen der wertmetallarmen Schlackenanalyse sicher.

Nachdem die Schlackenzusammensetzung die gewünschten Werte erreicht hat, wird sie aus dem Prozessraum entfernt. Das flüssige Metall verbleibt im Prozessraum, solange die für den Konvertierungsprozess zu empfehlende Rohmetallmenge nicht erreicht ist. Mit dem vorhandenen Metall beginnend wird der Prozess wiederholt, bis die optimale Menge an Metallschmelze für den nachfolgenden Prozessschritt gesammelt ist.

Um die möglichen negativen Einflüsse auf das Abgasverhalten durch ggf. auch sprunghafte Veränderungen des organischen Materialanteils bei der eingestellten konstanten Chargiermenge auszuschließen, wird das Abgassystem mit ausreichenden Sicherheiten ausgelegt. Diese Sicherheitsauslegung sieht einen Sauerstoffüberschuss für die Nachverbrennung vor. Dadurch enthält das Abgas nach Abschluss der Nachverbrennung mit ca. 10% ausreichend Sauerstoff. Auch bei plötzlichen Änderungen wird das Abgas mit 4 bis 6 % ausreichend genug Sauerstoff aufweisen, um die Nachverbrennung immer sicher abzuschließen.

Zu einer optimalen Prozessführung trägt es insbesondere bei, dass vor einem Beginn der Chargierung das zu verarbeitende Material entsprechend vorgegebener Kriterien sortiert und in separaten Vorratsmengen bereitgestellt wird. Gemäß einem einfachen Prozessablauf werden als Produkt der Sortierung entsprechende Materialhaufen bereitgestellt.

Das Abgassystem ermöglicht weiterhin die Einblasung von reinem Sauerstoff an verschiedenen Stellen des Abgasstroms. Dadurch sind Probleme durch Schadstoffe und Brenngas im Abgassystem infolge plötzlicher Schwankungen der Anteile organischen Materials innerhalb der komplexen Sekundärstoffe nicht zu erwarten. Zusätzlich wird durch die Steuerungs- und Regelungsmöglichkeiten der Nachverbrennung ein wirtschaftlicher Betrieb der Anlage unterstützt, da die maximale Ausbringung wiedergewonnenen Materials erreicht werden kann. Die rechtzeitige Charakterisierung der Vorstoffe ist ebenfalls geeignet, aus der Vorrichtung zur thermischen Behandlung den maximal möglichen Durchsatz zu erzielen.

Die austretenden Prozessraumgase werden durch eine Haube und Abgasrohr, ausgebildet als Abhitzekessel erfasst. Die Absaugung ist so dimensioniert, dass aus der Umgebung ausreichende Menge an Luft ebenfalls eingesaugt wird. So wird ein sauberer thermischer Behandlungsprozess sichergestellt, bei dem die Prozessgase nicht in die Umgebung austreten können.

Im an den Prozessraum angrenzenden Teil der Haube befinden sich Öffnungen, über die ein mit Sauerstoff angereicherte Nachverbrennungsluft bei höherem Druck eingeblasen werden. Die Einblasung von Sauerstoff und Luft verursacht eine dem Prozessraum nachgeschaltete Verbrennung der schadstoffbelasteten Prozessgase, die sogenannte Nachverbrennung.

Die Menge kann über die Abgasanalyse und Temperatur, gemessen im Bereich des Abgasrohres, dass an den Abgasreinigungsanlagen angrenzt, geregelt werden. So kann das System auf die Änderungen bezüglich variabler organischer Anteile des Sekundarstoffes bei konstantem Massenstrom reagieren. Dadurch ist eine Regelung bzw. Anpassung der Chargiermenge nicht notwendig, die Sekundärstoffe können kontinuierlich zugeführt werden. Das bedeutet, dass die sich infolge instationärer Anteile des organischen Materials ergebenden Prozessgasveränderungen durch die gesteuerte Zufuhr von Sauerstoff zur gezielten Beeinflussung der Nachverbrennung ausgeglichen werden. Der in die Nachverbrennungsluft eingeblasene Sauerstoff hat eine um Faktor 5 größere Nachverbrennungswirkung im Vergleich zu eingesaugter Luft. Diese Regelung ist schnell, effektiv und unterstützt die kontinuierliche Zuführung von komplexen Sekundärstoffen mit variablen organischen Anteilen.

Während der Chargierung steigt das Schmelzniveau im Prozessraum an. Die Schlackenanalyse wird so eingestellt, dass die Schlacke zu jedem Zeitpunkt metallarm bleibt. Dies wird erreicht durch die Einstellung der gewünschten Schlackenmatrix, der Badtemperatur und auch des Sauerstoffpotentials, was durch entsprechende Probenahme während des Betriebs kontrolliert wird. Eine metallarme Schlacke unterstützt den Wirkungsgrad der Wiedergewinnung des Recyclingmaterials. Das bedeutet praktisch, dass eine metallarme Schlacke durch Temperaturführung des Prozessraumes, injizieren von Luft, Sauerstoff oder einem Gemisch sowie ggf. Zuführung weiterer Reduktionsmittel und/oder Betriebs- und Zuschlagstoffen realisiert wird.

Nach Erreichen des gewünschten Füllgrades wird die Schlacke entfernt, während eine Restmenge und das produzierte Rohkupfer, ein eisenhaltiges Schwarzkupfer, im Prozessraum verbleiben kann. Im Anschluss kann der Prozess wiederholt werden, bis im Prozessraum die für die Konvertierung ausreichende Metallmenge gesammelt ist. Gemäß einer Prozessvariante kann das Schwarzkupfer im Ofen verbleiben oder weiterverarbeitet werden. Die Weiterverarbeitung kann in einem anderen metallurgischen Aggregat erfolgen.

Der Konvertierungsprozess des gesammelten Schwarzkupfers wird nach bekannten Verfahren entweder im TBRC oder in anderen Anlagen durchgeführt. Der Prozess führt zum Erhalt eines Blisterkupfers und auch einer Schlacke mit ausreichend hohen Zinn- und Bleigehalten, um daraus wirtschaftlich ein Mischzinn zu produzieren. Der Konvertierschritt ist insbesondere dann notwendig, wenn der Prozessraum nicht in einer Kupferhütte integriert betrieben werden soll. Dabei wird das gesammelte Rohkupfer, zusammen mit weiteren geeigneten Materialien oxidierend behandelt. Durch ein großes Angebot an reinem Sauerstoff werden die chemisch unedlen Bestandteile des Rohkupfers oxidiert und in eine Schlacke überführt. Dabei entsteht ein Blisterkupfer mit über 94% Kupfer und eine Schlacke, die für die Erzeugung eines Rohmischzinns ausreichend hohe Zinn- und Bleigehalte aufweist.

Der Ablauf der thermischen Behandlung einer Charge durch getaktete Prozessrealisierung bei kontinuierlicher Chargierung der komplexen Sekundärstoffe mit organischen Anteilen sowie der Betriebs- und Zuschlagstoffe ist der erste Schritt des zweistufigen Prozesses zur Realisierung der Rückgewinnung von Metall, insbesondere Kupfer aus der Schmelze sowie Zinn aus der Schlacke.

Der Prozessraum ist zu Beginn einer Charge leer oder enthält Restmengen an Schlacke und ggf. (erstarrte) Schmelze aus der Vorcharge. Grobe bzw. großstückige Materialien werden vorzugsweise zu Beginn chargiert. Danach wird der Prozessraum durch die Zuführung von Wärmeenergie, beispielsweise durch einen Brenner auf Betriebstemperatur vorgeheizt. Zum Start des Prozesses muss im Prozessraum wenigstens eine geringe Menge dünnflüssiger Schlacke vorhanden sein. Dann wird die kontinuierliche Chargierung der komplexen Sekundärstoffe mit organischen Anteilen sowie der Betriebs- und Zuschlagstoffe vorbereitet. Zur Vorbereitung gehören:
- Prozessraum ist ausreichend heiß, über 1200°C
- Abgassystem (Abhitzekessel mit den Nachverbrennungseinrichtungen, Anlagen zur Abgasreinigung) läuft ohne Störung
- Prozessraum-Umfangsgeschwindigkeit beträgt ca. 1 bis 3 m/s
- Die gewünschte Gattierung, d.h. die Zusammenstellung der einzelnen Materialgemische in Menge und Chargiergeschwindigkeit aus den Informationen der Charakterisierung auswählen und die Materialförderung starten
- Vorbereitung der Sauerstofflanze zum Chargierbeginn: Positionierung der Brenner- und Sauerstofflanze innerhalb des Prozessraumes.

Nach diesen Vorbereitungsschritten wird mit der kontinuierlichen Chargierung in den Prozessraum begonnen. Unter den Prozessstartbedingungen erfolgt unmittelbar der Beginn der oben beschriebenen Vorgänge, d,h. Vergasung, Schmelzen, Bildung von Schlacke und Metallschmelze.

Die Prozessgase mit hohen Mengen an brennbaren Bestandteilen werden nur zum Teil im Prozessraum verbrannt. Hierzu wird über eine Lanze Sauerstoff in den Prozessraum geblasen. Der Volumenstrom des Sauerstoffes bestimmt sich dabei in Abhängigkeit des organischen Materialanteils der komplexen Sekundärstoffe sowie deren Charakterisierung.

Die Verbrennung wird erst im nachfolgenden Abgasrohr, ausgebildet als Abhitzekessel, vervollständigt. Die für die vollständige Verbrennung notwendige Menge an Sauerstoff wird bereitgestellt durch:
Sauerstoffeinblasung über Öffnungen an der Haube,
Lufteinblasung über Öffnungen an der Haube,
Ansaugung von Umgebungsluft in die Haube,
Ansaugung von Umgebungsluft über Klappen am Abgasrohr.

Am Ende des Abgasrohres wird im Normalbetrieb ein Sauerstoffgehalt von 6 bis 10 % eingestellt. Dieser Überschuss ist in der Lage, kurzfristige Schwankungen der brennbaren Anteile im Prozessgas nach oben schnell und sicher zu kompensieren. Hinter dem Abgasrohr kann eine weitere Abgasreinigung erfolgen, beispielsweise durch Gaswäscher, Filter usw..

Durch die kontinuierliche Chargierung der komplexen Sekundärstoffe mit organischen Anteilen innerhalb eines getakteten thermischen Behandlungsprozesses steigt der Prozessrauminhalt und parallel dazu die Prozessraumfüllhöhe. Die Chargierung der Schlackenzuschläge hat das Ziel, im Prozessraum zu jeder Zeit eine für den hohen Stoffaustausch ausreichend dünnflüssige Schlacke sicherzustellen. Durch die Probenahme und Temperaturmessungen während der Chargierung wird die Schlackenanalyse geprüft. Wenn Änderungen notwendig sind, wird die Menge der Schlackenzuschläge angepasst.

Bei Erreichen des maximal möglichen Füllgrades wird gegebenenfalls die Einstellung der Schlackenanalyse vorgenommen. Hierzu werden notwendige Zuschläge chargiert und eine spezielle Sauerstofflanze kurz in die Schmelze eingetaucht. Dadurch wird der Stoffaustausch zwischen der Schlacke und dem Metalls extrem intensiviert. Eine kurze Behandlung ist hierfür ausreichend. Danach wird die Schlacke aus dem Prozessraum entfernt. Die Rohmetall- bzw. Rohkupferschmelze bleibt im Prozessraum.

Um eine optimale Rohkupfermenge für die Konvertierstufe zu haben, wird der Prozess wiederholt. Ob der Schmelzprozess zwei- oder mehrstufig ablaufen soll, ist je nach Gesamtvorstoffverfügbarkeit der komplexen Sekundärstoffe mit organischen Anteilen frei wählbar.

Im Anschluss erfolgt der Konvertierungsschritt, indem die Qualität des Rohkupfers aus dem Schmelzprozess weiter angehoben wird. Der Konvertierschritt ist insbesondere dann notwendig, wenn der Betrieb der Anlage zur Verarbeitung von komplexen Sekundärstoffen mit organischen Anteilen nicht in eine Kupferhütte integriert, sondern alleine auf sich gestellt laufen soll. Dabei wird das gesammelte Rohkupfer, zusammen mit weiteren geeigneten Materialien oxidierend behandelt. Durch ein großes Angebot an reinem Sauerstoff werden die chemisch unedlen Bestandteile des Rohkupfers (z. B. Zinn, Blei, Nickel, Zink, Eisen, etc) oxidiert und in die Schlacke überführt. Dabei entsteht ein Blisterkupfer mit über 94% Kupfer und eine Schlacke, die für die wirtschaftliche Erzeugung eines Rohmischzinns ausreichend hohe Zinn- und Bleigehalte aufweist.

Die Gewinnung dieses Rohmischzinns ist Gegenstand der zweiten Prozessstufe. Durch chemische Reduzierung der zuvor erzeugten Prozessschlacke des Prozessschrittes der Konvertierung, vorzugsweise im Rahmen einer mehrstufigen Reduktion in dem Ofen für Mischzinngewinnung, wird das Rohmischzinn extrahiert. Dazu sind Vorrichtung und Verfahren detailliert in der DE 102012005401 A1 beschrieben, auf die im Rahmen der zweiten Prozessstufe Bezug genommen wird. Der erste Prozessschritt ist das Schmelzen und die Produktion von Schwarzkupfer und metallarmer Schlacke.

## Patentansprüche

1. Verfahren zur Rückgewinnung von Metallen, nämlich von Edelmetallen und Kupfer aus Sekundärstoffen und anderen Materialien mit organischen Bestandteilen, wobei den Sekundärstoffen und anderen Materialien durch Behandlung in einem Prozessraum die organischen Komponenten entzogen werden, und die Sekundärstoffe und anderen Materialien mit organischen Bestandteilen für den Rückgewinnungsprozess vorbereitet sind sowie bei dem der Rückgewinnungsprozess wenigstens zweistufig ausgebildet ist, sodass zumindest ein erstes und ein zweites Metall rückgewinnbar ist, und dass das Verfahren die Prozessvariablen der ersten Stufe des Rückgewinnungsprozesses derart steuert, dass die Bildung einer dünnflüssigen Schlacke mit geringer Viskosität und einer Metallschmelze durch Zugabe eines Schlackenbildners unterstützt ist, und eine der ersten Stufe des Rückgewinnungsprozesses nachgelagerte Prozessgasbehandlung zur Reduzierung von brennbaren Gasanteilen und Schadstoffen vorgesehen ist, **dadurch gekennzeichnet, dass** der Anteil der organischen Bestandteile 5 % bis 60 % beträgt und dass eine Lufteinblasung derart erfolgt, dass der Sauerstoffgehalt im Abgasstrom zwischen 6 % und 10 % liegt, wobei in der ersten Stufe ein TBRC mit einer Umfangsgeschwindigkeit von ein bis drei Meter/Sekunde verwendet wird.

2. Verfahren zur Rückgewinnung von Metallen nach Anspruch 1, **dadurch gekennzeichnet, dass** die Sekundärstoffe und anderen Materialien mit organischen Bestandteilen chargenweise oder kontinuierlich für den Rückgewinnungsprozess bereitgestellt sind.

3. Verfahren zur Rückgewinnung von Metallen nach Anspruch 1, oder 2 **dadurch gekennzeichnet, dass** die Sekundärstoffe und anderen Materialien mit organischen Bestandteilen dem Rückgewinnungsprozess kontinuierlich zugeführt werden.

4. Verfahren zur Rückgewinnung von Metallen nach Anspruch 1, oder 2, **dadurch gekennzeichnet, dass** die Sekundärstoffe und anderen Materialien mit organischen Bestandteilen dem Rückgewinnungsprozess diskontinuierlich zugeführt werden.

5. Verfahren zur Rückgewinnung von Metallen nach Anspruch 4, **dadurch gekennzeichnet, dass** die Sekundärstoffe und anderen Materialien mit organischen Bestandteilen für den Rückgewinnungsprozess derart vorbereitet sind, sodass ein im Wesentlichen vergleichbarer Anteil organischen Materials vorliegt und dadurch die kontinuierliche Zuführung unterstützt wird.

6. Verfahren zur Rückgewinnung von Metallen nach Anspruch 1, **dadurch gekennzeichnet, dass** die Sekundärstoffe und anderen Materialien mit organischen Bestandteilen für den Rückgewinnungsprozess vorbereitet sind durch Charakterisierung und/oder Vorsortierung und/oder Zerkleinerung.

7. Verfahren zur Rückgewinnung von Metallen nach Anspruch 1, **dadurch gekennzeichnet, dass** die Sekundärstoffe und anderen Materialien mit organischen Bestandteilen für den Rückgewinnungsprozess derart vorbereitet und analysiert sind, dass Informationen über die Schlackenbildner (Fe/FeO, SiO2, Al2O3, CaO, Na2O, K2O, Mn, Cr) für die Zuführung von Zuschlags- und Betriebsstoffen genutzt werden, sodass die Bildung einer dünnflüssigen Schlacke unterstützt wird.

8. Verfahren zur Rückgewinnung von Metallen nach Anspruch 1, **dadurch gekennzeichnet, dass** eine der ersten Stufe des Rückgewinnungsprozesses nachgelagerte Prozessgasbehandlung in einem Abgasbehandlungsraum zur Reduzierung von brennbaren Gasanteilen und Schadstoffen vorgesehen ist.

9. Verfahren zur Rückgewinnung von Metallen nach Anspruch 8, **dadurch gekennzeichnet, dass** das Prozessgas durch die Zuführung von Sauerstoff eine Nachverbrennung zur Reduzierung von brennbaren Gasanteilen erfährt.

10. Verfahren zur Rückgewinnung von Metallen nach Anspruch 9, **dadurch gekennzeichnet, dass** die Zuführung von reinem Sauerstoff vorgesehen ist.

11. Verfahren zur Rückgewinnung von Metallen nach Anspruch 9 **dadurch gekennzeichnet, dass** die Zuführung eines Gemisches bestehend aus reinem Sauerstoff und Umgebungsluft vorgesehen ist.

12. Verfahren zur Rückgewinnung von Metallen nach Anspruch 9, **dadurch gekennzeichnet, dass** innerhalb des Abgasbehandlungsraumes zur Reduzierung von brennbaren Gasanteilen und Schadstoffen eine Sauerstoffkonzentration von 10% vorgesehen ist, sodass eine weitgehend vollständige Nachverbrennung zur Reduzierung von brennbaren Gasanteilen auch bei ungleichmäßigen organischen Anteilen in den Sekundärstoffen und anderen Materialien unterstützt wird.

13. Verfahren zur Rückgewinnung von Metallen nach Anspruch 1, **dadurch gekennzeichnet, dass** den Sekundärstoffen und anderen Materialien mit organischen Anteilen in der ersten Stufe des Rückgewinnungsprozesses durch eine thermische und oxidierende Behandlung in wenigstens einem Prozessraum die organischen Komponenten entzogen werden.

14. Verfahren zur Rückgewinnung von Metallen nach Anspruch 13, **dadurch gekennzeichnet, dass** nach der thermischen und oxidierenden Behandlung der ersten Stufe des Rückgewinnungsprozesses eine Kupfer enthaltende Schmelze und eine Zinn enthaltende Schlacke vorliegt, die voneinander getrennt werden.

15. Verfahren zur Rückgewinnung von Metallen nach Anspruch 14, **dadurch gekennzeichnet, dass** die erste Stufe des Rückgewinnungsprozesses durch eine Konvertierungsbehandlung der das Kupfer enthaltenden Schmelze abgeschlossen wird.

16. Verfahren zur Rückgewinnung von Metallen nach Anspruch 14, **dadurch gekennzeichnet, dass** die zweite Stufe des Rückgewinnungsprozesses eine chemisch reduzierende Behandlung der das Zinn enthaltenden Schlacke umfasst.

17. Verfahren nach Anspruch 16, **dadurch gekennzeichnet, dass** ein Mischzinn-Prozess durchgeführt wird.

18. Verfahren nach Anspruch 16, **dadurch gekennzeichnet, dass** das Verfahren ohne Mischzinn-Prozess durchgeführt wird.

19. Verfahren zur Rückgewinnung von Metallen nach Anspruch 1, **dadurch gekennzeichnet, dass** der Prozessraum der ersten Stufe des Rückgewinnungsprozesses durch einen TBRC oder Drehrohrofen oder Drehtrommelofen oder einen ISA-Smelter/TSL-Smelter und der Prozessraum der zweiten Stufe des Rückgewinnungsprozesses durch einen Schmelzofen gebildet ist.

20. Verfahren zur Rückgewinnung von Metallen nach Anspruch 1, **dadurch gekennzeichnet, dass** die Sekundärstoffe und anderen Materialien mit organischen Bestandteilen gebildet sind durch Elektroschrott und/oder Kabelresten und, oder Restkunststoffen aus elektrischen oder elektronischen Geräten, wobei der Gesamtanteil organischen Materials zwischen 5 % bis 60%, insbesondere zwischen 20 % und 40 %, liegt.

## Claims

1. Process for the recovery of metals, mainly of noble metals and copper, from secondary materials and other materials having organic constituents, where the organic components are withdrawn from the secondary materials and other materials by treatment in a process space and the secondary materials and other materials having organic constituents have been prepared for the recovery process and where the recovery process is made up of at least two stages so that at least a first metal and a second metal are recoverable and the process controls the process variables of the first stage of the recovery process in such a way that the formation of a fluid slag having a low viscosity and a metal melt is assisted by addition of a slag former and a process gas treatment following the first stage of the recovery process is provided for reducing combustible gas components and pollutants, **characterized in that** the proportion of the organic constituents is from 5% to 60% and **in that** blowing-in of air is carried out in such a way that the oxygen content in the offgas stream is in the range from 6% to 10%, with a TBRC having a circumferential velocity of from one to three meters/second is used in the first stage.

2. Process for the recovery of metals according to Claim 1, **characterized in that** the secondary materials and other materials having organic constituents are provided batchwise or continuously for the recovery process.

3. Process for the recovery of metals according to Claim 1 or 2, **characterized in that** the secondary materials and other materials having organic constituents are fed continuously to the recovery process.

4. Process for the recovery of metals according to Claim 1 or 2, **characterized in that** the secondary materials and other materials having organic constituents are fed discontinuously to the recovery process.

5. Process for the recovery of metals according to Claim 4, **characterized in that** the secondary materials and other materials having organic constituents are prepared for the recovery process in such a way that an essentially comparable proportion of organic materials is present and the continuous introduction is assisted thereby.

6. Process for the recovery of metals according to Claim 1, **characterized in that** the secondary materials and other materials having organic constituents have been prepared for the recovery process by characterization and/or presourcing and/or comminution.

7. Process for the recovery of metals according to Claim 1, **characterized in that** the secondary materials and other materials having organic constituents have been prepared and analysed for the recovery process in such a way that information about the slag formers (Fe/FeO, SiO₂, Al₂O₃, CaO, Na₂O, K₂O, Mn, Cr) are utilized for the introduction of additives and operation materials so that the formation of a fluid slag is assisted.

8. Process for the recovery of metals according to Claim 1, **characterized in that** a process gas treatment following the first stage of the recovery process is provided in an offgas treatment space for reducing combustible gas components and pollutants.

9. Process for the recovery of metals according to Claim 8, **characterized in that** the process gas experiences an after-combustion for reducing combustible gas components as a result of the introduction of oxygen.

10. Process for the recovery of metals according to Claim 9, **characterized in that** the introduction of pure oxygen is provided.

11. Process for the recovery of metals according to Claim 9, **characterized in that** the introduction of a mixture consisting of pure oxygen and ambient air is provided.

12. Process for the recovery of metals according to Claim 9, **characterized in that** an oxygen concentration of 10% is provided within the offgas treatment space for reducing combustible gas components and pollutants so that largely complete after-combustion for reducing combustible gas components is assisted even in the case of nonuniform organic components in the secondary materials and other materials.

13. Process for the recovery of metals according to Claim 1, **characterized in that** the organic components are withdrawn from the secondary materials and other materials having organic components in the first stage of the recovery process by means of a thermal and oxidative treatment in at least one process space.

14. Process for the recovery of metals according to Claim 13, **characterized in that** a copper-containing melt and a tin-containing slag are present after the thermal and oxidative treatment of the first stage of the recovery process and these are separated from one another.

15. Process for the recovery of metals according to Claim 14, **characterized in that** the first stage of the recovery process is concluded by a conversion treatment of the melt containing the copper.

16. Process for the recovery of metals according to Claim 14, **characterized in that** the second stage of the recovery process comprises a chemically reducing treatment of the slag containing the tin.

17. Process according to Claim 16, **characterized in that** a tin-lead process is carried out.

18. Process according to Claim 16, **characterized in that** the process is carried out without a tin-lead process.

19. Process for the recovery of metals according to Claim 1, **characterized in that** the process space of the first stage of the recovery process is formed by a TBRC or rotary tube furnace or rotary drum furnace or an ISA smelter/TSL smelter and the process space of the second stage of the recovery process is formed by a melting furnace.

20. Process for the recovery of metals according to Claim 1, **characterized in that** the secondary materials and other materials having organic constituents are formed by electrical scrap and/or cable residues and/or residue plastics from electric or electronic appliances, where the total proportion of organic material is in the range from 5% to 60%, in particular from 20% to 40%.

## Revendications

1. Procédé de récupération de métaux, à savoir de métaux nobles et de cuivre à partir de matières secondaires et d'autres matériaux contenant des constituants organiques, les composants organiques étant extraits des matières secondaires et autres matériaux par traitement dans une chambre de processus, et les matières secondaires et autres matériaux contenant des constituants organiques étant préparés pour le processus de récupération, et le processus de récupération étant configuré au moins à deux étapes, de telle sorte qu'au moins un premier et un deuxième métal puissent être récupérés, et le procédé contrôlant les variables de processus de la première étape du processus de récupération de telle sorte que la formation d'une scorie fluide de faible viscosité et d'une masse fondue métallique soit supportée par ajout d'un agent de formation de scorie, et un traitement de gaz de processus en aval de la première étape du processus de récupération pour la réduction de fractions gazeuses combustibles et de contaminants étant prévu, **caractérisé en ce que** la proportion des constituants organiques est de 5 % à 60 % et **en ce qu'**une injection d'air a lieu de telle sorte que la teneur en oxygène dans le courant de gaz d'échappement soit comprise entre 6 % et 10 %, un TBRC ayant une vitesse périphérique de un à trois mètres/seconde étant utilisé dans la première étape.

2. Procédé de récupération de métaux selon la revendication 1, **caractérisé en ce que** les matières secondaires et autres matériaux contenant des constituants organiques sont mis à disposition en lots ou de manière continue pour le processus de récupération.

3. Procédé de récupération de métaux selon la revendication 1 ou 2, **caractérisé en ce que** les matières secondaires et autres matériaux contenant des constituants organiques sont introduits de manière continue dans le processus de récupération.

4. Procédé de récupération de métaux selon la revendication 1 ou 2, **caractérisé en ce que** les matières secondaires et autres matériaux contenant des constituants organiques sont introduits de manière discontinue dans le processus de récupération.

5. Procédé de récupération de métaux selon la revendication 4, **caractérisé en ce que** les matières secondaires et autres matériaux contenant des constituants organiques sont préparés pour le processus de récupération de telle sorte qu'une proportion essentiellement comparable de matériau organique soit présente et que l'introduction continue soit ainsi supportée.

6. Procédé de récupération de métaux selon la revendication 1, **caractérisé en ce que** les matières secondaires et autres matériaux contenant des constituants organiques sont préparés pour le processus de récupération par caractérisation et/ou tri préliminaire et/ou broyage.

7. Procédé de récupération de métaux selon la revendication 1, **caractérisé en ce que** les matières secondaires et autres matériaux contenant des constituants organiques sont préparés pour le processus de récupération et analysés de telle sorte que des informations sur les agents de formation de scorie (Fe/FeO, SiO₂, Al₂O₃, CaO, Na₂O, K₂O, Mn, Cr) soient utilisées pour l'introduction d'additifs et de matières consommables, de manière à supporter la formation d'une scorie fluide.

8. Procédé de récupération de métaux selon la revendication 1, **caractérisé en ce qu'**un traitement de gaz de processus en aval de la première étape du processus de récupération est prévu dans une chambre de traitement de gaz d'échappement pour la réduction de fractions gazeuses combustibles et de contaminants.

9. Procédé de récupération de métaux selon la revendication 8, **caractérisé en ce que** le gaz de processus subit par l'introduction d'oxygène une post-combustion pour la réduction de fractions gazeuses combustibles.

10. Procédé de récupération de métaux selon la revendication 9, **caractérisé en ce que** l'introduction d'oxygène pur est prévue.

11. Procédé de récupération de métaux selon la revendication 9, **caractérisé en ce que** l'introduction d'un mélange constitué d'oxygène pur et d'air ambiant est prévue.

12. Procédé de récupération de métaux selon la revendication 9, **caractérisé en ce qu'**une concentration en oxygène de 10 % est prévue à l'intérieur de la chambre de traitement de gaz d'échappement pour la réduction de fractions gazeuses combustibles et de contaminants, de telle sorte qu'une post-combustion essentiellement totale pour la réduction de fractions gazeuses combustibles soit supportée également en cas de fractions organiques non uniformes dans les matières secondaires et autres matériaux.

13. Procédé de récupération de métaux selon la revendication 1, **caractérisé en ce que** les composants organiques sont extraits des matières secondaires et autres matériaux contenant des fractions organiques dans la première étape du processus de récupération par un traitement thermique et oxydant dans au moins une chambre de processus.

14. Procédé de récupération de métaux selon la revendication 13, **caractérisé en ce qu'**après le traitement thermique et oxydant de la première étape du processus de récupération, une masse fondue contenant du cuivre et une scorie contenant de l'étain sont présentes, qui sont séparées l'une de l'autre.

15. Procédé de récupération de métaux selon la revendication 14, **caractérisé en ce que** la première étape du processus de récupération est terminée par un traitement de conversion de la masse fondue contenant le cuivre.

16. Procédé de récupération de métaux selon la revendication 14, **caractérisé en ce que** la deuxième étape du processus de récupération comprend un traitement chimiquement réducteur de la scorie contenant l'étain.

17. Procédé selon la revendication 16, **caractérisé en ce qu'**un processus de production d'étain mixte est réalisé.

18. Procédé selon la revendication 16, **caractérisé en ce que** le procédé est réalisé sans processus de production d'étain mixte.

19. Procédé de récupération de métaux selon la revendication 1, **caractérisé en ce que** la chambre de processus de la première étape du processus de récupération est formée par un TBRC ou un four à tube rotatif ou un four à tambour rotatif ou un fondeur ISA/fondeur TSL et la chambre de processus de la deuxième étape du processus de récupération est formée par un four de fusion.

20. Procédé de récupération de métaux selon la revendication 1, **caractérisé en ce que** les matières secondaires et autres matériaux contenant des constituants organiques sont formés par des rébus électroniques et/ou des résidus de câbles et/ou des matières plastiques résiduelles issues d'appareils électriques ou électroniques, la proportion totale de matériau organique étant comprise entre 5 % et 60 %, notamment entre 20 % et 40 %.
